# EUROPEAN PATENT APPLICATION

(11) **EP 3 933 251 A1**
(43) Date of publication of application: **05.01.2022**
(21) Application number: 21181873.7
(22) Date of filing: 25.06.2021
(51) Int. Cl.: F21K 9/23, F21K 9/235, F21K 9/238, F21S 41/148, F21S 41/19, H05B 41/285, F21Y 115/10

(54) **LED LAMP FOR VEHICLE HEADLAMP**

(30) Priority: 30.06.2020 IT 202000015706
(71) Applicant: Ultrasuono Service S.r.l., 80055 Portici (NA) (IT)
(72) Inventor: BRUNO, GENNARO, I-80055 Portici (NA) (IT)
(74) Representative: Carangelo, Pierluigi

(57) **Abstract**

An LED lamp (1) for a vehicle headlamp, comprising:
- at least one optical LED source (2);
- a driver circuit (21, 22) electrically connected to the optical LED source (2) to drive said optical LED source (2);
- a main body (3) comprising a tubular base portion (4), inside which the driver circuit (21, 22) is arranged, and further comprising a support portion (5), which protrudes from the tubular base portion (4) and on which the optical LED source (2) is arranged;
- a fixing ring (6) arranged around the tubular base portion (4), adapted and configured to fix the LED lamp (1) to a vehicle headlamp;
characterized in that the driver circuit (21, 22) comprises a first circuit board (21), preferably a printed circuit board, arranged in the tubular base portion (4) and oriented transversely to the tubular base portion (4).

## Description

### FIELD OF THE INVENTION

The present invention relates to the technical field of lighting devices intended to be installed on board vehicles, and in particular relates to an LED lamp for a vehicle headlamp.

### PRIOR ART

To date, different formats of lamps for vehicle headlamps, for example H4, H7, H18, etc. lamps are known. Such lamps are shaped as a plug and fixed in respective coupling seats provided in automotive headlamps. For this purpose, the aforesaid lamps generally have a tubular base provided with a mechanical fixing ring and plug terminals with rod conductors adapted to be engaged in conjugated socket connectors. The tubular base is inserted in a coupling opening provided in the coupling seat and generally the headlamp comprises elastic fixing elements, such as, for example shaped elastic arms, which acting in conjunction with the fixing ring, allow the tubular base to be locked in the fixing seat. To ensure the correct positioning of the lamp with respect to the automobile headlamp, the fixing ring generally comprises one or more centering elements, for example one or more centering fins and/or centering recesses.

As is known, LED lamps currently are increasingly used in the automobile field due to the superior performance of the optical LED sources with respect to conventional sources, such as for example incandescent lamps. Indeed, LED lamps generally have superior performance in terms of lighting efficiency, energy consumption and duration.

By contrast however, LED lamps for automobile headlamps currently available have certain drawbacks with respect to incandescent lamps. Such drawbacks essentially are due to the fact that the LED lamps require driver circuits and/or finned heat sinks or relatively cumbersome fans, whereby the replacement of an incandescent lamp headlamp with an LED lamp is not always possible and in any case requires additional components, such as, for example mechanical adapters or, in certain now almost obsolete solutions, external power supplies of the LED lamps. A further drawback of LED lamps currently available lies in the fact that there is a need to pay attention to the polarity of the connection terminals in order to connect the LED lamps to the onboard electrical systems of the vehicles, in particular to connect them to the socket connectors.

It is a general object of the present invention to provide an LED lamp for a vehicle headlamp which is capable of solving one or more of the above-mentioned drawbacks with reference to the LED lamps of the known art.

The aforesaid object, as well as the other objects which are more apparent below, are achieved by an LED lamp for a vehicle headlamp according to claim 1. Preferred and advantageous embodiments of the aforesaid LED lamp are defined in the appended dependent claims.

The invention will be better understood from the following detailed description of particular embodiments thereof, provided by way of explanation and therefore, non-limiting, with reference to the accompanying drawings which are briefly described in the following paragraphs.

### BRIEF DESCRIPTION OF THE DRAWINGS

Figure 1 shows a front plan elevation view of a non-limiting embodiment of an LED lamp for a vehicle headlamp.
Figure 2 shows a side plan view of the LED lamp in Figure 1.
Figure 3 shows an axonometric view of the LED lamp in Figure 1.
Figure 4 shows an exploded axonometric view of the LED lamp in Figure 1.
Figure 5 shows a front plan elevation view of a further non-limiting embodiment of an LED lamp for a vehicle headlamp.
Figure 6 shows an exploded axonometric view of the LED lamp in Figure 5.

### DETAILED DESCRIPTION

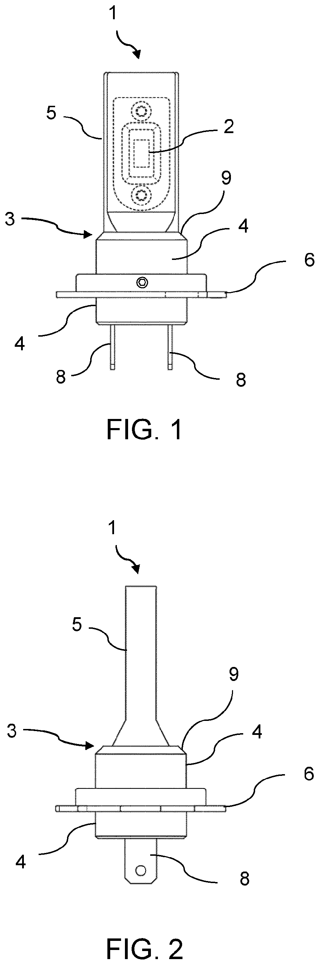

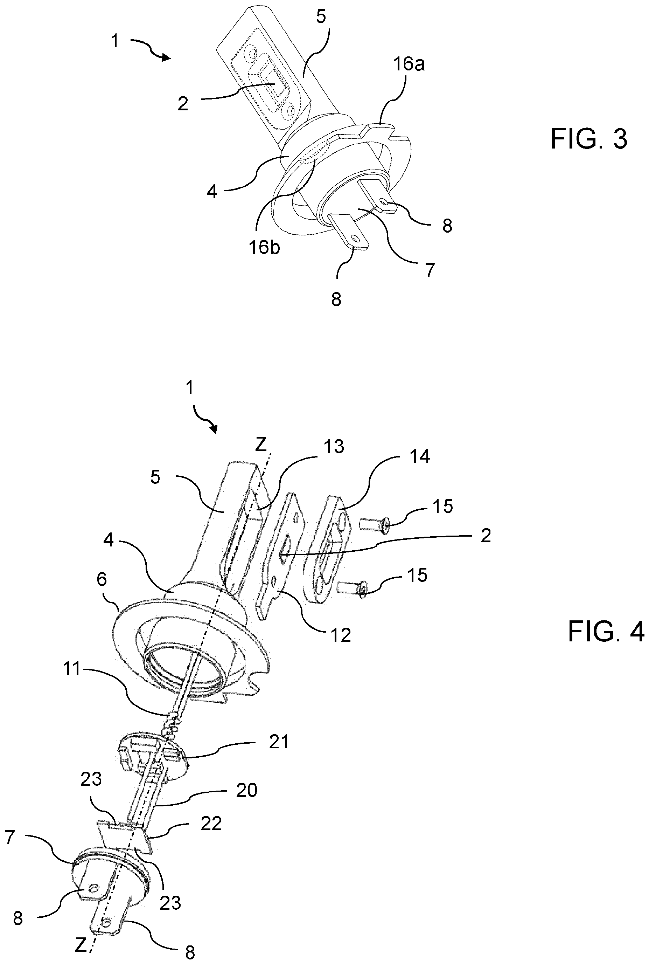

Figures 1 to 4 show a non-limiting embodiment of an LED lamp 1 for a vehicle headlamp. For example, the LED lamp 1 is adapted and configured to be fixed in a front headlamp of a motor vehicle or a motorcycle and to be electrically connected to the electrical systems of the motor vehicle or motorcycle. According to a particularly preferred embodiment, the LED lamp 1 is an H7 lamp; according to an alternative embodiment, the LED lamp 1 is an H18 lamp.

The LED lamp 1 comprises at least one optical LED source 2. According to an advantageous embodiment, the LED lamp 1 comprises at least a pair of optical LED sources 2 arranged opposing each other so as to emit luminous fluxes having opposing directions. According to a particularly advantageous embodiment, the LED lamp 1 comprises a plate-like support element 12 made of material having an increased thermal conductivity, e.g. a copper fixing plate, on at least one face on which the at least one optical LED source 2 is mounted, for example glued or welded. According to an embodiment, it is advantageous to provide an insulating film on the face of the support plate-like element 12 on or in which electrically conductive tracks are made and on which the at least one optical LED source 2 connected to the electrically conductive tracks is mounted. Such an insulating film advantageously is such as to only partly cover the related face of the support plate-like element 12, for example so as to leave free one or more peripheral edges of the support plate-like element 12 in order to improve the performance in terms of heat dissipation.

If the LED lamp 1 comprises two optical LED sources 2, it is advantageous to fix such optical LED sources 2 on opposite faces of the plate-like support element 12. Advantageously, two insulating films of the type described above may be provided, each coupled to a respective face of the plate-like support element 12.

The LED lamp 1 further comprises a driver circuit 21, 22 electrically connected to the optical LED source 2 to drive the optical LED source 2, i.e. to provide the optical LED source 2 with an electrical signal having electrical parameters, such as, for example voltage and/or current, which are required or compatible for the operation of the optical LED source 2.

The LED lamp 1 further comprises a main body 3 comprising a tubular base portion 4, inside which the driver circuit 21, 22 is arranged, and a support portion 5, which protrudes from the tubular portion 4 and on which the optical LED source 2 is arranged. According to an advantageous embodiment, the main body 3 is made of aluminum and preferably is a monobloc body, for example made by means of high pressure die casting.

According to an advantageous embodiment, the tubular base portion 4 is adjacent to the support portion 5. For example, the tubular base portion 4 comprises an externally conical end portion 9 and the support portion 5 is arranged above the externally conical end portion 9. The support portion 5 preferably is shaped as a parallelepiped, for example as a plate-like parallelepiped.

The LED lamp 1 further comprises a fixing ring 6 arranged around the tubular base portion 4 of the main body 3 and adapted and configured to fix the LED lamp 1 to a vehicle headlamp. According to a possible embodiment, the fixing ring 6 forms a single piece with the tubular base portion 4 or with the main body 3 in general. Conveniently, the fixing ring 6 comprises one or more centering elements 16a, 16b adapted and configured to ensure a correct positioning in fixing the LED lamp 1 to the vehicle headlamp. In the example shown in the drawings, without thereby introducing any limitation, the fixing ring 6 comprises a centering fin 16a and a centering recess 16b.

According to a particularly advantageous embodiment, the fixing ring 6 has a hat-shaped cross section, i.e. a cross section which has a step profile in at least two diametrically opposing parts.

Conveniently, the tubular base portion 4 has a first part extending above the fixing ring 6, in particular between the fixing ring 6 and the support portion 5, and a second part extending below the fixing ring 6. Advantageously, the second part of the tubular base portion 4 has a smaller longitudinal extension than the longitudinal extension of the first part of the tubular base portion 4. For example, the longitudinal extension of the first part of the tubular base portion 4 is at least 1.5 times the longitudinal extension of the second part of the tubular base portion 4. Preferably, the longitudinal extension of the second part, measured from the lower face of the fixing ring 6, is less than 8 mm, preferably less than 7 mm, for example equal to about 5.4 mm.

The driver circuit 21, 22 further comprises a first circuit board 21, preferably a printed circuit board, arranged in the tubular base portion 4 and oriented transversely to the tubular base portion 4. Preferably, the first circuit board 21 is a plate-like circuit board and is circular or substantially circular in shape.

According to an advantageous embodiment, the first circuit board 21 is arranged inside the tubular base portion 4 so as to be oriented perpendicularly to an axis of main longitudinal extension Z-Z of the tubular base portion 4.

According to an advantageous embodiment, the first circuit board 21 comprises and/or supports at least one integrated circuit adapted and configured to drive the at least one optical LED source 2, for example a buck LED driver, for example a constant current synchronous buck LED driver.

According to a particularly advantageous embodiment:
- the LED lamp 1 comprises a closing element 7 of the tubular base portion 4, such as for example a cap, comprising at least two electrical connection plug terminals 8; and
- at least one electronic component of the driver circuit 21, 22 is fixed to the closing element 7 and arranged inside the tubular base portion 4.

In the embodiment described in the preceding paragraph, it is also advantageous to provide for the driver circuit 21, 22 to comprise a second circuit board 22 fixed to the closing element 7 and on which said at least one electronic component is mounted. Moreover, it is particularly advantageous to provide for this second circuit board 22 to be directly connected to the connection terminals 8, for example directly welded to an end portion of the connection terminals which is arranged inside the tubular base portion 4.

Moreover, it is particularly advantageous to provide for the second circuit board 22 to comprise one or two recesses 23 arranged on the edges of the second circuit board 2. If there are 2 recesses, it is suitable for such recesses 23 to be arranged on opposite edges of the second circuit board 22. The end portions of the connection terminals 8 arranged inside the tubular base portion 6 may at least partly occupy such recesses 23 and thereby the assembly of the LED lamp 1 is simplified and the axial dimensions are decreased.

According to an embodiment, the first circuit board 21 and the second circuit board 22 are operatively connected to each other by means of one or more electrical conductors 20, for example electric wires.

According to an embodiment, said at least one electronic component fixed to the closing element 7 is adapted and configured to condition a voltage and/or a current supplied to the electrical connection terminals 8. For example, the aforesaid at least one electronic component is a component, for example an integrated circuit, adapted and configured to correct, when required, the polarity of the electrical signal supplied to the LED lamp 1 by the electric system of the vehicle, in particular of the electrical signal supplied to the connection terminals 8 by the electric system of the vehicle.

The closing element 7 is for example made of electrically insulating material (for example ABS) and preferably is crossed by the electric terminals 8. Such electric terminals 8 preferably are two electrical rod conductors, for example strip conductors, with rectangular cross section. Preferably, the first circuit board 21 is axially spaced apart from the closing element 7.

According to an embodiment, the support portion 5 comprises a housing seat 13 inside which the support plate-like element 12 of the at least one optical LED source 2 is housed and fixed. In this embodiment, it is particularly advantageous to provide for the LED lamp 1 to comprise a clamping plate-like frame 14 adapted to block and clamp the support plate-like element 12 in the housing seat 13. The aforesaid clamping plate-like frame 14 comprises a first window arranged around the optical LED source 2 to allow the external diffusion of the optical radiation emitted by the optical LED source 2. According to a non-limiting embodiment, the clamping plate-like frame 14 is fixed to the support portion 5 by means of one or more screws 15 or rivets or other similar or equivalent fixing means.

According to a particularly advantageous embodiment, the clamping plate-like frame 15 is recessed, for example recessed flush, in the housing seat 13. If the LED lamp 1 comprises two opposing optical LED sources, a second window opposite to the first window disclosed in the preceding paragraph and having the same function as the latter, is provided on the bottom of the housing seat 13, opposite to the clamping plate-like frame 14.

The tubular base portion 4 and/or the support portion 5 comprise at least one passage channel defined therebetween (not shown in the drawings), which allows the first printed circuit board 21 to be electrically connected to the optical LED source 2 by means of one or more electric wires 11. In the particular example shown, two electric wires 11 are provided. For example, such one or more electric wires 11 electrically connect the first printed circuit board 21 with the support plate-like element 12, for example by means of the conductive tracks arranged above or inside the at least one electrically insulating film fixed to the at least one respective face of the support plate-like element 12. According to a particularly advantageous embodiment, the one or more electric wires 11 are variable-length wires and in this regard comprise for example at least one spiral or accordion-like portion, for example elastically deformable, which allows the length of the wire to be increased or decreased.

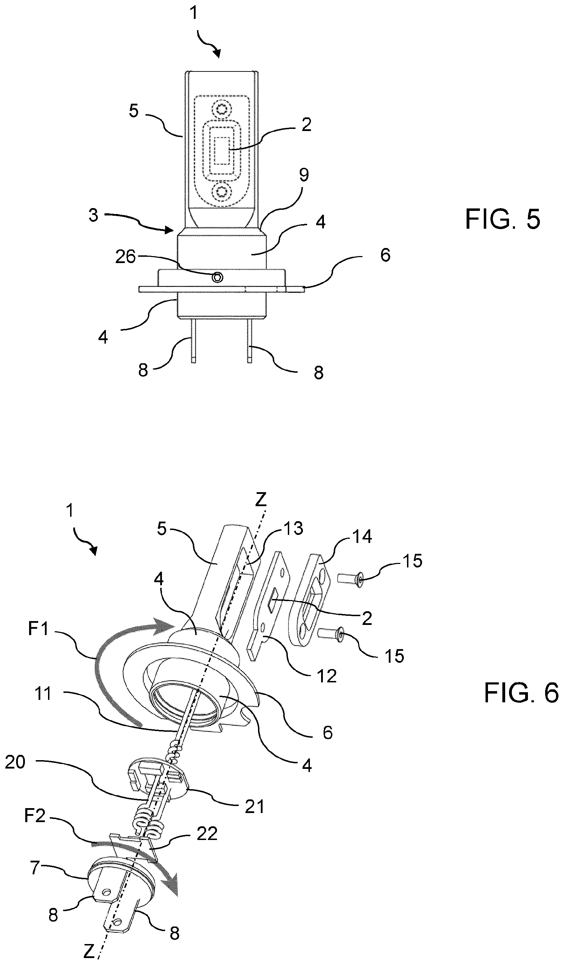

Figures 5 and 6 show a further embodiment of LED lamp 1 which is entirely similar to the one described above with reference to Figures 1 to 4. According to such an embodiment, the fixing ring 6 is rotatable with respect to the tubular base portion 4 and, for example may rotate, as indicated by arrow F1 (preferably in two opposite directions), with respect to the tubular base portion 4 around a rotation axis Z-Z which is, for example the axis of main longitudinal extension of the base portion 4. The LED lamp 1 preferably comprises at least one locking element 26 adapted to selectively block the rotation of the fixing ring 6 with respect to the tubular base portion 4. For example, such a locking element 26 comprises a plug which, by crossing a wall of the fixing ring 6, may be advanced, for example by screwing, in a respective threaded seat to interfere abutting against a wall of the tubular base portion 4 and thereby block a relative rotation between the fixing ring 6 and the tubular base portion 4. Thereby, the angular position of the LED source 2 may be adjusted in installation step inside a headlamp so as to optimize the emission of the light beam and then block the rotation by means of the locking element 26.

Again with reference to Figures 5 and 6, according to an advantageous embodiment which may be implemented jointly with or alternately to the one described in the preceding paragraph, the closing element 7 in the LED lamp 1 is pivotally fixed with respect to the tubular base body 4, as shown by arrow F2. Thereby, once fixed to the tubular base body 4, the closing element 7 may be rotated (preferably in two opposite directions), for example by applying a given manual force and for example around axis Z-Z, to adjust the relative angular position between the closing element 7 and the tubular base body 4, and therefore between the closing element 7 and the fixing ring 6. Thereby, the installation flexibility of the LED lamp 1 is considerably increased in headlamps which, for example due to forced housings for the connectors which interface with the electrical connection terminals 8, impose constraints with respect to the angular position of the electrical connection terminals 8. Moreover, it is particularly advantageous to provide for the one or more connection wires 20 allowing the first circuit board 21 to be connected to the second circuit board 22, or to the electrical connection terminals 8 in general, to be variable-length wires and in this regard to comprise, for example at least one spiral or accordion-like portion, for example elastically deformable, which allows the length of the wire to be increased or decreased.

From the above, it is apparent that an LED lamp as described above allows fully achieving the set objects in terms of overcoming the drawbacks of the LED lamps of the prior art. Indeed, an LED lamp of the above type is particularly compact and does not require heat sinks or fans or adapters for the installation. Moreover, the above-described LED lamps were developed to perfectly conform in terms of size with the prescriptions of Directive ECE R37 concerning halogen lamps, resulting in the ability to use the developed LED lamps to directly replace halogen lamps conforming with the directive indicated above.

Without prejudice to the principle of the invention, the embodiments and the constructional details may be broadly varied relative to the above description disclosed by way of non-limiting example, without departing from the scope of the invention as defined in the appended claims.

## Claims

1. An LED lamp (1) for a vehicle headlamp, comprising:
- at least one optical LED source (2);
- a driver circuit (21, 22) electrically connected to the optical LED source (2) to drive said optical LED source (2);
- a main body (3) comprising a tubular base portion (4), inside which the driver circuit (21, 22) is arranged, and further comprising a support portion (5), which protrudes from the tubular base portion (4) and on which the optical LED source (2) is arranged;
- a fixing ring (6) arranged around the tubular base portion (4), adapted and configured to fix the LED lamp (1) to a vehicle headlamp;
**characterized in that** the driver circuit (21, 22) comprises a first circuit board (21), preferably a printed circuit board, arranged in the tubular base portion (4) and oriented transversely to the tubular base portion (4).

2. An LED lamp (1) according to claim 1, wherein the LED lamp (1) comprises a closing element (7) of the tubular base portion (4), comprising at least two electrical connection terminals (8), and wherein at least one electronic component of the driver circuit (21, 22) is fixed to the closing element (7) and arranged inside the tubular base portion (4).

3. An LED lamp (1) according to claim 2, wherein the driver circuit (21, 22) comprises a second circuit board (22) fixed to the closing element (7) and on which said at least one electronic component is mounted.

4. An LED lamp (1) according to claim 2 or 3, wherein said at least one electronic component is adapted and configured to condition a voltage and/or a current supplied to said electrical connection terminals (8).

5. An LED lamp (1) according to any one of claims 2 to 4, wherein said at least one electronic component is adapted and configured to perform, if required, a polarity correction of the electrical signal supplied to the LED lamp (1) .

6. An LED lamp (1) according to claim 3, or according to claims 4 or 5 when dependent on claim 3, wherein the second circuit board (22) is directly connected to the connection terminals (8), for example directly welded to an end portion of the connection terminals which is arranged inside the tubular base portion (4).

7. An LED lamp (1) according to claims 3 or 6, or according to claims 4 or 5 when dependent on claim 3, wherein the second circuit board (22) comprises one or two recesses (23) arranged on the edges of the second circuit board (22).

8. An LED lamp (1) according to any one of the preceding claims, wherein the first circuit board (21) is circular or substantially circular in shape.

9. An LED lamp (1) according to any one of the preceding claims, wherein the tubular base portion (4) has a first part extending above the fixing ring (6), in particular between the fixing ring (6) and the support portion (5), and a second part extending below the fixing ring (6), and wherein the second part of the tubular base portion (4) has a longitudinal extension which is smaller than the longitudinal extension of the first part of the tubular base portion (4).

10. An LED lamp (1) according to claim 9, wherein the longitudinal extension of the first part of the tubular base portion (4) is at least 1.5 times the longitudinal extension of the second part of the tubular base portion (4) .

11. An LED lamp (1) according to any one of the preceding claims, wherein the support portion (5) comprises a housing seat (13) inside which a support plate-like element (12) of the at least one optical LED source (2) is housed and fixed, and wherein the LED lamp (1) comprises a clamping plate-like frame (14) adapted to block and clamp the support plate-like element (12) in the housing seat (13).

12. An LED lamp (1) according to claim 11, wherein said support plate-like element (12) is made of a material having a relatively high thermal conductivity, such as copper, for example.

13. An LED lamp (1) according to any one of the preceding claims, wherein the fixing ring (6) is rotatable with respect to the tubular base portion (4) and wherein the LED lamp (1) preferably comprises at least one locking element (26) adapted to selectively block the rotation of the fixing ring (6) with respect to the tubular base portion (4).

14. An LED lamp (1) according to claim 2, wherein the closing element (7) is pivotally fixed with respect to the tubular base body (4).

15. A vehicle headlamp comprising an LED lamp (1) according to any one of the preceding claims.
